# EUROPÄISCHE PATENTSCHRIFT

(11) **EP 2 908 983 B1**
(45) Veröffentlichungstag und Bekanntmachung des Hinweises auf die Patenterteilung: **06.09.2017**
(21) Anmeldenummer: 14718362.8
(22) Anmeldetag: 07.04.2014
(51) Int. Cl.: B25B 15/00, B25B 23/10, F16B 23/00

(54) **WERKZEUG, SCHRAUBE UND SYSTEM ZUR ÜBERTRAGUNG EINES ANTRIEBSMOMENTS**
TOOL, SCREW AND SYSTEM FOR TRANSMITTING A DRIVE TORQUE
OUTIL, VIS ET SYSTÈME DE TRANSMISSION D'UN COUPLE D'ENTRAÎNEMENT

(30) Priorität: 08.04.2013 DE 102013103463
(43) Veröffentlichungstag der Anmeldung: 26.08.2015
(73) Patentinhaber: Ludwig Hettich Holding GmbH & Co. KG, 78713 Schramberg-Sulgen (DE)
(72) Erfinder: HETTICH, Ulrich, 78713 Schramberg (DE)
(74) Vertreter: Lucke, Andreas
(86) Internationale Anmeldenummer: PCT/EP2014/056933
(87) Internationale Veröffentlichungsnummer: WO 2014/166870

(56) Entgegenhaltungen:
- EP-A1- 1 039 151
- EP-A2- 2 363 245
- US-A1- 2007 245 863

## Beschreibung

### GEBIET DER ERFINDUNG

Die vorliegende Erfindung liegt auf dem Gebiet der Verbindungs- und Kraftübertragungstechnik. Insbesondere betrifft sie ein Antriebswerkzeug zur Übertragung eines Antriebsmoments auf einen Verbindungspartner, insbesondere auf eine Schraube, eine entsprechende Schraube und ein System, welches das Antriebswerkzeug und die Schraube umfasst.

### HINTERGRUND DER ERFINDUNG

Aus dem Stand der Technik ist eine Vielzahl von Antriebswerkzeugen mit Keilprofilen bekannt, mit denen ein Drehmoment bzw. Antriebsmoment auf einen Verbindungspartner, beispielsweise auf eine Schraube, übertragen werden kann. Um das Antriebsmoment von dem Antriebswerkzeug auf den Verbindungspartner zu übertragen, wird das Antriebswerkzeug in eine Aufnahmevertiefung des Verbindungspartners eingeführt und das Antriebswerkzeug um eine Mittelachse gedreht.

Als ein Beispiel für ein Keilprofil eines Antriebswerkzeugs wird insbesondere auf das US-Patent 3584667 hingewiesen, welches eine Verbindungsanordnung und ein Antriebswerkzeug betrifft, das unter dem Handelsnamen TORX weltweit eine große Verbreitung aufweist. Dieses Profil hat auch unter dem Begriff "Sechsrund" Eingang in die internationale Normung gefunden. Der "Innensechsrund" ist in dem internationalen Standard ISO 10664 und eine Schraube mit einer entsprechend ausgebildeten Aufnahmevertiefung in dem internationalen Standard ISO 14583 spezifiziert.

In der vorliegenden Beschreibung werden ein Antriebswerkzeug und ein zugehöriger bzw. geeigneter Verbindungspartner als ein System oder Antriebssystem bezeichnet. Die verschiedenen Antriebssysteme im Stand der Technik wurden maßgeblich im Hinblick auf das Übertragen von Antriebsmomenten entwickelt. Viele Keilprofile sind dabei im Wesentlichen zylindrisch, d.h. das Querschnittsprofil des Keilprofils bzw. seine Form ist entlang der Mittelachse des Antriebswerkzeugs im Wesentlichen unverändert. Im Gegensatz zu den zylindrischen Antriebssystemen umfasst der Stand der Technik auch konische Antriebssysteme, bei denen sich das Antriebswerkzeug oder Abschnitte davon in Richting seiner Mittelachse verjüngt. Beispiele für konische Antriebswerkzeuge sind die Antriebswerkzeuge "Pozidriv" und "Phillips H".

Durch eine geeignete Wahl der Geometrie ist es bei konischen Systemen möglich, den Verbindungspartner auf das Antriebswerkzeug aufzustecken und durch eine Klemmung oder Verkeilung mit diesem zu verbinden. Zum Lösen der Klemmverbindung muss eine gewisse Kraft aufgewendet werden. Man spricht hier von einem sogenannten "Stick-Fit"-Effekt. Die durch den Stick-Fit-Effekt hervorgerufene Haltekraft übersteigt üblicherweise das mehrfache Eigengewicht des Verbindungspartners. Dadurch ist es möglich, den Verbindungspartner mit dem Antriebswerkzeug in allen möglichen Positionen zu halten und zu führen.

Um einen Stick-Fit-Effekt zu erreichen, werden im Stand der Technik Antriebssysteme eingesetzt, die Flächen aufweisen, die gegenüber der Mittelachse geneigt sind und deren Flächennormalen jeweils eine Komponente in Umfangsrichtung haben, die somit, vereinfacht ausgedrückt, in Umfangsrichtung geneigte Antriebsflächen aufweisen. Im Gegensatz zu rein zylindrischen Antriebssystemen, haben solche Antriebssysteme den Nachteil, bei einer Antriebsmomentbelastung eine Reaktionskraft in axiale Richtung zu erzeugen, das heißt, sie neigen dazu, das Antriebswerkzeug auszuhebeln. In Bezug auf das Antriebswerkzeug ist mit dem Begriff "axiale Richtung" in der vorliegenden Beschreibung die Richtung der Mittelachse gemeint.

Ein Nachteil von zylindrischen Systemen ist dagegen, dass ein Stick-Fit-Effekt nicht möglich ist. Ein weiterer Nachteil der zylindrischen Systeme besteht darin, dass ein Spiel zwischen dem Antriebswerkzeug und der Aufnahmevertiefung des Verbindungspartners vorhanden sein muss, um das Antriebswerkzeug einführen zu können. Dieses Spiel führt dazu, dass der Verbindungspartner axial nicht ausreichend geführt ist, und dass das Antriebswerkzeug gegenüber dem Verbindungspartner innerhalb einer gedachten Kegelfläche gegenüber der Mittelachse des Verbindungspartners verschränkt werden kann. Dieser Effekt wird auch als "Wobble" bezeichnet.

Derartige Antriebssysteme mit einem vergleichsweise großem Wobble sind beispielsweise nicht für Verschraubungen geeignet, die für ihren Einsatz eine axiale Führung benötigen, wie z.B. Verschraubungen mit Schrauben, die eine Bohrspitze aufweisen.

Die EP 2 363 245 A2 offenbart ein Antriebswerkzeug, welches als eine modifizierte Version eines Standard-Sechsrund-Werkzeugs aufgefasst werden kann. Der Antrieb unterscheidet sich von einem Standardantrieb nur im Bereich der radial äußeren Scheitelabschnitte der Vorsprünge, an denen zur Längsachse geneigte Interferenzkonturen vorgesehen sind, die mit entsprechenden Abschnitten in der Aufnahmevertiefung einer zugehörigen Schraube wechselwirken, um einen Stick-Fit-Effekt hervorzurufen. Außerhalb dieser Scheitelabschnitte ist das Werkzeug jedoch zylindrisch.

### ZUSAMMENFASSUNG DER ERFINDUNG

Der Erfindung liegt die Aufgabe zugrunde, ein Antriebswerkzeug, eine Schraube und ein System aus einem Antriebswerkzeug und einer Schraube zur Verfügung zu stellen, mit denen ein Stick-Fit-Effekt möglich ist, die bei einer Antriebsmomentbelastung keine oder nahezu keine Reaktionskraft in axiale Richtung hervorrufen und die zugleich einen vergleichsweise geringen Wobble aufweisen.

Diese Aufgabe wird durch ein Antriebswerkzeug nach Anspruch 1, durch eine Schraube nach Anspruch 8 und durch ein System nach Anspruch 12 gelöst. Vorteilhafte Weiterbildungen sind in den abhängigen Ansprüchen angegeben.

Das erfindungsgemäße Antriebswerkzeug dient zur Übertragung eines Antriebsmoments auf einen Verbindungspartner. Der Verbindungspartner kann beispielsweise eine Schraube sein. Das Antriebswerkzeug ist geeignet, in eine Aufnahmevertiefung des Verbindungspartners geführt zu werden und bei einer Drehung um eine Mittelachse das Antriebsmoment auf den Verbindungspartner zu übertragen. Das Antriebswerkzeug weist ein erstes Ende, ein zweites Ende und radial nach außen vorstehende, im Querschnitt keilartige erste Vorsprünge auf. Zwischen je zwei benachbarten ersten Vorsprüngen befindet sich jeweils ein radial innerer Kernabschnitt, und jeder der keilartigen ersten Vorsprünge umfasst einen radial äußeren Scheitelabschnitt. Mit Hilfe der ersten Vorsprünge kann das Antriebsmoment auf den Verbindungspartner übertragen werden.

Um mit einem geeigneten Verbindungspartner einen Stick-Fit-Effekt zu erzielen, weist das Antriebswerkzeug einen "quasi-zylindrischen" Abschnitt auf.

Die Außenfläche des quasi-zylindrischen Abschnitts ist in dem Sinne "quasi-zylindrisch", dass sämtliche Mantellinien im Bereich des quasi-zylindrischen Abschnitts mit der Mittelachse einen Winkel bilden, der kleiner als 10° ist, jedoch die Außenfläche zumindest abschnittsweise derart konisch ist, dass die Mantellinien Kernabschnitten gegenüber der Mittelachse um mindestens 1,5°, vorzugsweise um mindestens 2,5° geneigt sind. Bei dem Antriebswerkzeug sind die Mantellinien als Schnittlinie zwischen der Außenfläche des Antriebswerkzeugs und einer Ebene definiert, welche die Mittelachse enthält. Bei einem wirklich zylindrischen Abschnitt wären sämtliche Mantellinien exakt parallel zu der Mittelachse. In dem "quasi-zylindrischen Abschnitt" des erfindungsgemäßen Antriebswerkzeugs sind die Winkel sämtlicher Mantellinien in Bezug auf die Mittelachse klein, nämlich kleiner als 10°, so dass man ihn als näherungsweise zylindrisch ansehen kann. Gleichwohl ist er zumindest abschnittsweise leicht konisch, um einen Stick-Fit-Effekt mit einer zylindrischen (oder ebenfalls quasi-zylindrischen) Aufnahmevertiefung herstellen zu können. Man beachte, dass hier, anders als beispielsweise bei dem Pozidriv-Antrieb, ein Stick-Fit-Effekt mit einem nur sehr leicht konischen Werkzeugabschnitt erzeugt wird, anstatt mit einem in axialer Richtung keilförmig zulaufenden Element. Dadurch wird verhindert, dass das Antriebswerkzeug bei einer Antriebsmomentbelastung aus dem Verbindungspartner herausgehebelt wird.

Um einen Stick-Fit-Effekt zwischen Antriebswerkzeug und Verbindungspartner zu erreichen, müssen die Mantellinien der Außenfläche des Antriebswerkzeugs zumindest abschnittsweise einen bestimmten Winkel überschreiten, ihr Winkel sollte jedoch nicht wesentlich größer als der Reibungswinkel sein, der von den Reibkoeffizienten des Antriebswerkzeugs und des Verbindungspartners abhängig ist. Übliche Reibkoeffizienten haben einen Wert im Bereich von 0,15. Dieser Wert entspricht einem Reibwinkel von 8,5°. Die Erfinder haben erkannt, dass der oben genannte Winkelbereich von 1,5° bis 10° optimal geeignet ist, um mit einem geeigneten Verbindungspartner einen Stick-Fit-Effekt zu erzielen.

Der Wobble wird einerseits von den Fertigungstoleranzen, aber in viel stärkerem Maße von der Eindringtiefe des Antriebswerkzeugs in die Aufnahmevertiefung des Verbindungspartners bestimmt. Um die Eindringtiefe gegenüber herkömmlichen Antriebswerkzeugen zu erhöhen, weist das erfindungsgemäße Antriebswerkzeug weiterhin einen sich in Richtung auf das erste Ende verjüngenden Abschnitt auf. Der sich verjüngende Abschnitt ist auf der dem ersten Ende näheren Seite des quasi-zylindrischen Abschnitts angeordnet, und seine Mantellinien im Bereich der radial äußeren Scheitelabschnitte der ersten Vorsprünge weisen zumindest abschnittsweise einen Winkel zur Mittelachse auf, der mindestens 30°, vorzugsweise mindestens 40° und besonders vorzugsweise mindestens 44° beträgt und kleiner als 60° ist.

Aufgrund des sich verjüngenden Abschnitts kann das Antriebswerkzeug tiefer in eine entsprechende Aufnahmevertiefung eines entsprechenden Verbindungspartners geführt werden, ohne dass dazu beispielsweise die Wandstärke zwischen der Aufnahmevertiefung und der Außenseite des Verbindungspartners abnehmen muss. Üblicherweise wird bei Verbindungspartnern, beispielsweise bei Schrauben, die Tiefe der Aufnahmevertiefung durch die minimale Wandstärke begrenzt. Bei einer rein zylinderförmigen Aufnahmevertiefung und bei einer schräg zur Aufnahmevertiefung verlaufenden Außenfläche des Verbindungspartners im Bereich der Aufnahmevertiefung, nimmt die Wandstärke in zunehmender Tiefe der Aufnahmevertiefung ab. Aufgrund des sich verjüngenden Abschnitts eignet sich das erfindungsgemäße Antriebswerkzeug für Verbindungspartner mit einer tieferen Aufnahmevertiefung, deren minimale Wandstärke jedoch nicht verringert ist. Damit kann die Eindringtiefe vergrößert und der Wobble des Antriebswerkzeugs in Bezug auf den Verbindungspartner reduziert werden.

Alternativ lässt sich der sich verjüngende Abschnitt auch so beschrieben, dass dieser "abgefast" bzw. in einen gedachten Kegelstumpf einbeschreibbar ist, der einen halben Öffnungswinkel von mindestens 30°, vorzugsweise von mindestens 40° und besonders vorzugsweise von mindestens 44° aufweist.

Die axial geneigten, den Stick-Fit-Effekt hervorrufenden Mantellinien befinden sich in den Kernabschnitten, d.h. zwischen je zwei benachbarten ersten Vorsprüngen. Diese gegenüber der Mittelachse geneigten Kernabschnitte weisen im Wesentlichen nach radial außen, und nicht in Umfangsrichtung, sind also an der Erzeugung des Antriebsmoments nicht oder nur minimal beteiligt. Daher wird bei einer Antriebsmomentbelastung in Verbindung mit einem Verbindungspartner keine oder allenfalls eine geringe Reaktionskraft in axiale Richtung erzeugt. Dadurch kann noch besser verhindert werden, dass das erfindungsgemäße Antriebswerkzeug, das einen Stick-Fit-Effekt erzeugt, bei Antriebsmomentbelastung aus dem Verbindungspartner herausgehebelt wird.

Um den Stick-Fit-Effekt zu erzeugen, können zusätzlich oder alternativ die Mantellinien in den radial äußeren Scheitelabschnitten der ersten Vorsprünge in dem quasi-zylindrischen Abschnitt zumindest abschnittsweise gegenüber der Mittelachse um mindestens 1,5°, vorzugsweise um mindestens 2,5° geneigt sein. Wie in den Kernabschnitten, weist auch die Außenfläche im Bereich der radial äußeren Scheitelabschnitte nicht in Umfangsrichtung. Damit ist auch der durch eine Mantellinienneigung in radial äußeren Scheitelabschnitten verursachte Anteil des Stick-Fit-Effekts nicht mit der Erzeugung einer Reaktionskraft in axiale Richtung verbunden, so dass ein Aushebeln des Antriebswerkzeug trotz Stick-Fit-Effekt sicher verhindert werden kann.

Gemäß einer Aufführungsform können die keilartigen ersten Vorsprünge des Antriebswerkzeugs derartig ausgebildet und angeordnet sein, dass die Querschnittsform des quasi-zylindrischen Abschnitts im Wesentlichen der Querschnittsform eines Sechsrundprofils nach ISO 10664 entspricht. Damit kann das Antriebswerkzeug einen modifizierten Sechsrundantrieb zur Verfügung stellen, der gegenüber einem herkömmlichen Sechsrundantrieb die Vorteile bietet, dass der Wobble geringer ist und ein Stick-Fit-Effekt ohne ein Aushebeln ermöglicht wird.

Vorzugsweise weisen die Mantellinien in dem sich verjüngenden Abschnitt im Bereich der radial äußeren Scheitelabschnitte der ersten Vorsprünge zumindest abschnittsweise einen Winkel zur Mittelachse auf, der kleiner als 50° und vorzugsweise kleiner als 46° ist. Damit liegt der genannte halbe Öffnungswinkel des genannten gedachten Kegelstumpfes besonders vorzugsweise in einem Bereich zwischen 44° und 46°, so dass ein derartiges Antriebswerkzeug beispielsweise für Senkkopfschrauben mit einem Senkwinkel von etwa 90° verwendet werden kann. Da das Antriebswerkzeug jedoch nicht auf solche Verbindungspartner beschränkt ist, können auch, wie oben genannt, andere Winkelbereiche erfindungsgemäß bei dem Antriebswerkzeug auftreten.

Weiterhin ist es vorteilhaft, wenn bei dem Antriebswerkzeug die Mantellinien in dem sich verjüngenden Abschnitt in den radial inneren Kernabschnitten zumindest abschnittsweise unter einem Winkel zur Mittelachse verlaufen, der kleiner als 1,5° ist. Besonders vorzugsweise verlaufen die Mantellinien in den genannten Bereichen zumindest abschnittsweise annährend parallel zur Mittelachse. Diese Bereiche ermöglichen zusammengenommen damit eine passgenaue Führung des Antriebswerkzeugs in einer entsprechenden Aufnahmevertiefung mit wenig Spiel. Dadurch kann der Wobble im Zusammenhang mit einem geeigneten Verbindungspartner mit einer geeigneten Aufnahmevertiefung weiter reduziert werden.

Um einen besonders guten Stick-Fit-Effekt zu erreichen, bilden die Mantellinien in dem genannten quasi-zylindrischen Abschnitt mit der Mittelachse vorzugsweise einen Winkel, der kleiner oder gleich 4,5° ist.

Um ein zu starkes Verstemmen bzw. Verkeilen mit einem Verbindungspartner zu verhindern, umfasst das Antriebswerkzeug vorzugsweise weiterhin einen speziell gestalteten Endabschnitt. Der Endabschnitt ist auf der dem zweiten Ende näheren Seite des quasi-zylindrischen Abschnitts angeordnet und weist Mantellinien auf, die in Richtung auf das zweite Ende von der Mittelachse divergieren. Beim Divergieren bilden die Mantellinien mit der Mittelachse vorzugsweise einen Winkel, der größer als 4,5° ist und der besonders vorzugsweise in Richtung auf das zweite Ende zunimmt, wobei insbesondere ein Winkel von 10° erreicht oder überschritten wird. Durch seine Form kann der Endabschnitt vorgeben, wie weit das Antriebswerkzeug in eine Aufnahmevertiefung eingeführt werden kann und dadurch die Stärke des Stick-Fit-Effektes mitbestimmen bzw. begrenzen.

Ferner umfasst die vorliegende Erfindung eine Schraube, auf die mit einem Antriebswerkzeug nach einer der zuvor beschriebenen Ausführungsformen ein Antriebsmoment übertragen werden kann. Die Schraube umfasst ein erstes Schraubenende, ein zweites Schraubenende und einen Schaftabschnitt mit einem Gewinde. Der Schaftabschnitt definiert eine Schraubenachse. Wie die zuvor genannte Mittelachse des Antriebswerkzeugs ist auch die Schraubenachse eine gedachte Linie, welche der Beschreibung von Lage- und Anordnungsbeziehungen dient. Die Schraube umfasst weiterhin einen Kopfabschnitt, der am zweiten Schraubenende angeordnet ist und der eine Aufnahmevertiefung umfasst.

Die Aufnahmevertiefung dient der Aufnahme eines Antriebswerkzeugs nach einer der zuvor beschriebenen Ausführungsformen und weist eine Form auf, die durch eine Innenfläche definiert ist. Die Innenfläche umfasst radial nach innen vorstehende, im Querschnitt keilartige zweite Vorsprünge, an die das Antriebsmoment über die ersten Vorsprünge des Antriebswerkzeugs angreifen kann. Außerdem umfasst die Innenfläche einen zylindrischen oder quasi-zylindrischen Vertiefungsabschnitt, in dem die Innenfläche in dem Sinne zylindrisch oder quasi-zylindrisch ist, dass dessen Mantellinien mit der Schraubenachse einen Winkel bilden, der kleiner oder gleich 4,5° ist, wobei insbesondere ein Winkel von 0° möglich ist, was der zylindrischen Variante entspricht. Entsprechend der zuvor genannten Definition sind die Mantellinien bei der Schraube als Schnittlinie zwischen der Innenfläche und einer Ebene definiert, welche die Schraubenachse enthält.

Die erfindungsgemäße Schraube kann in ihrem zylindrischen oder quasi-zylindrischen Vertiefungsabschnitt den quasi-zylindrischen Abschnitt des erfindungsgemäßen Antriebswerkzeugs aufnehmen , wobei durch ein Zusammenwirken des quasi-zylindrischen Abschnitts des Antriebswerkzeugs und des zylindrischen oder quasi-zylindrischen Vertiefungsabschnittes der Schraube ein Stick-Fit-Effekt erzeugt wird. Aufgrund der beschriebenen Geometrien und Winkelbereiche wird bei einer Antriebsmomentbelastung keine axiale Reaktionskraft erzeugt oder sie wirkt sich zumindest nicht oder vergleichsweise wenig aus.

Entsprechend dem sich verjüngenden Abschnitt des Antriebswerkzeugs umfasst die Schraube einen sich verjüngenden Vertiefungsabschnitt, der geeignet ist, den sich verjüngenden Abschnitt des Antriebswerkzeugs aufzunehmen. Der sich verjüngende Vertiefungsabschnitt ist auf der dem ersten Schraubenende näheren Seite des zylindrischen oder quasi-zylindrischen Vertiefungsabschnitts angeordnet und verjüngt sich in Richtung auf das erste Schraubenende. Die Mantellinien des sich verjüngenden Vertiefungsabschnitts weisen im Bereich zwischen den zweiten Vorsprüngen zumindest abschnittsweise einen Winkel zur Schraubenachse auf, der mindestens 30°, vorzugsweise mindestens 40° und besonders vorzugsweise mindestens 44° beträgt. Dadurch kann die Aufnahmevertiefung eine vergleichsweise große Tiefe aufweisen, ohne dass dabei die Wandstärke im unteren Bereich der Aufnahmevertiefung notwendigerweise schwächer werden muss. Dies wäre beispielsweise der Fall, wenn eine zylindrische Aufnahmevertiefung in einem Kopfabschnitt mit einer Senkform zylindrisch fortgesetzt vertieft würde.

Vorzugsweise weisen die Mantellinien in dem sich verjüngenden Vertiefungsabschnitt im Bereich zwischen den zweiten Vorsprüngen zumindest abschnittsweise einen Winkel zur Schraubenachse auf, der kleiner als 60°, vorzugsweise kleiner als 50° und besonders vorzugsweise kleiner als 46° ist.

In einer vorteilhaften Weiterbildung verlaufen die Mantellinien in dem sich verjüngenden Vertiefungsabschnitt im Bereich des Scheitels der zweiten Vorsprünge zumindest abschnittsweise unter einem Winkel zur Schraubenachse, der kleiner als 1,5° ist. Vorzugsweise verlaufen sie zumindest annährend parallel zur Schraubenachse. Mit Hilfe dieses Bereiches oder Abschnitts kann die erfindungsgemäße Schraube ein Antriebswerkzeug nach einer der vorgenannten Ausführungsformen sehr gut geführt aufnehmen, so dass der Wobble reduziert wird. Gemäß einer Aufführungsform kann die Aufnahmevertiefung der Schraube derart geformt sein, dass die Querschnittsform der Aufnahmevertiefung im zylindrischen oder quasi-zylindrischen Vertiefungsabschnitt im Wesentlichen der Querschnittsform einer Aufnahmevertiefung mit Sechsrundprofil einer Schraube nach ISO 14583 entspricht. Damit kann die Schraube eine modifizierte Sechsrundschraube zur Verfügung stellen, die gegenüber einer herkömmlichen Sechsrundschraube die Vorteile bietet, dass ihr Wobble geringer ist und dass sie einen Stick-Fit-Effekt ohne ein Aushebeln des Antriebswerkzeugs ermöglicht.

Schließlich umfasst die vorliegende Erfindung ein System, das eine Schraube nach einer der vorgenannten Ausführungsformen sowie ein Antriebswerkzeug nach einer der vorgenannten Ausführungsformen umfasst. Zur Bildung eines verbundenen Zustands des Systems kann das Antriebswerkzeug lösbar in die Aufnahmevertiefung der Schraube geführt werden.

Bei dem System ist die Form der Aufnahmevertiefung vorzugsweise derart an die Form des Antriebswerkzeugs angepasst, dass die Schraube und das Antriebswerkzeug im verbundenen Zustand aus einer mittleren Position heraus, in welcher die Mittelachse des Antriebswerkzeugs und die Schraubenachse zusammenfallen, um maximal 10° und vorzugsweise um maximal 5° gegeneinander verkippt werden können. Diese maximale Verkippung von Schraube und Antriebswerkzeug in verbundenen Zustand entspricht dabei dem genannten Wobble, wobei diese Begriffe austauschbar verwendet werden können.

In einer vorteilhaften Weiterbildung ist im verbundenen Zustand des Systems das Spiel zwischen der Außenfläche des Antriebswerkzeugs und der Innenfläche der Aufnahmevertiefung im Bereich zwischen den zweiten Vorsprüngen der Aufnahmevertiefung größer als im Bereich der Kernabschnitte des Antriebswerkzeugs. Demnach müssen nicht alle Bereiche der Außenfläche des Antriebswerkzeugs und der Innenfläche der Aufnahmevertiefung mit der gleichen hohen Fertigungstoleranz gefertigt werden, um den vorteilhaft geringen Wobble zu erreichen. Konkret wird dadurch im Falle der Schraube eine höhere Anforderung an die Fertigungspräzision im Bereich der radial inneren Scheitel der keilartigen zweiten Vorsprünge gestellt, was fertigungstechnisch vorteilhaft ist. Der Wobble wird durch das geringe Spiel in dem genannten Bereichen , d.h. durch das Zusammenwirken der radial inneren Kernabschnitte des Antriebswerkzeugs und der radial inneren Scheitelbereiche der keilartigen zweiten Vorsprünge, maßgeblich beeinflusst und gering gehalten.

Bei dem System kann der Kopfabschnitt der Schraube eine Senkform mit einem Senkwinkel β aufweisen. In dem sich verjüngenden Abschnitt des Antriebswerkzeugs haben die Mantellinien dann im Bereich der radial äußeren Scheitelabschnitte der ersten Vorsprünge vorzugsweise zumindest abschnittsweise einen Winkel zur Mittelachse, der größer oder gleich 0,7 x β/2, vorzugsweise größer oder gleich 0,9 x β/2 ist, und/oder der kleiner oder gleich 1,3 x β/2, vorzugsweise kleiner oder gleich 1,1 x β/2 ist.

### KURZBESCHREIBUNG DER FIGUREN

Weitere Vorteile und Merkmale der Erfindung ergeben sich aus der folgenden Beschreibung, in der bevorzugte Ausführungsformen der Erfindung mit Bezugnahme auf die beigefügten Figuren näher erläutert werden. Für einander entsprechende Teile in unterschiedlichen Figuren werden die gleichen Bezugszeichen verwendet.
- Fig. 1: zeigt eine perspektivische Ansicht eines Antriebswerkzeugs gemäß einer bevor-zugten Ausführungsform der Erfindung.
- Fig. 2: ist eine Draufsicht auf das Antriebswerkzeug aus Fig. 1.
- Fig. 3: ist eine Schnittansicht des Antriebswerkzeugs aus Fig. 1 bei einem Schnitt entlang der in Fig. 2 eingezeichneten gewinkelten Linie von A nach A'.
- Fig. 4: zeigt eine Draufsicht auf eine Schraube gemäß einer bevorzugten Ausführungs-form der Erfindung.
- Fig. 5: zeigt eine Schnittansicht eines Abschnitts der Schraube aus Fig. 4 bei einem Schnitt entlang der in Fig. 4 eingezeichneten gewinkelten Linie von B nach B'.

### BESCHREIBUNG BEVORZUGTER AUSFÜHRUNGSFORMEN

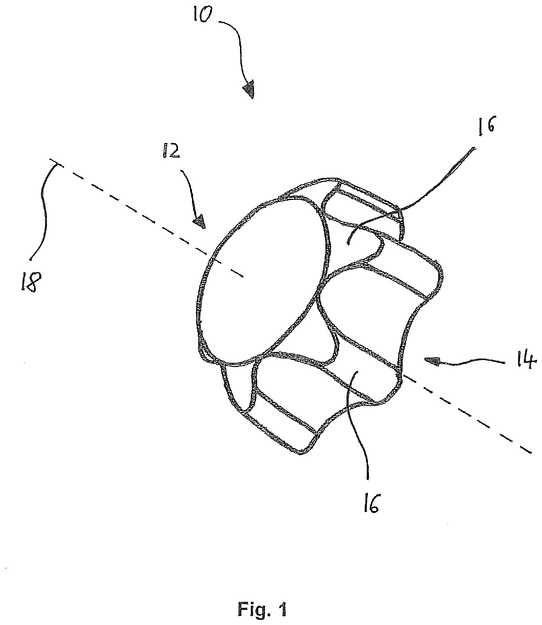

Fig. 1 zeigt ein Antriebswerkzeug 10 gemäß einer Ausführungsform der vorliegenden Erfindung. Das Antriebswerkzeug 10 hat ein erstes Ende 12, ein zweites Ende 14 und radial nach außen vorstehende, im Querschnitt keilartige erste Vorsprünge 16. Das Antriebswerkzeug 10 ist geeignet, bei einer Drehung um die Mittelachse 18 ein Antriebsmoment auf einen Verbindungspartner (nicht gezeigt), beispielsweise eine Schraube, zu übertragen.

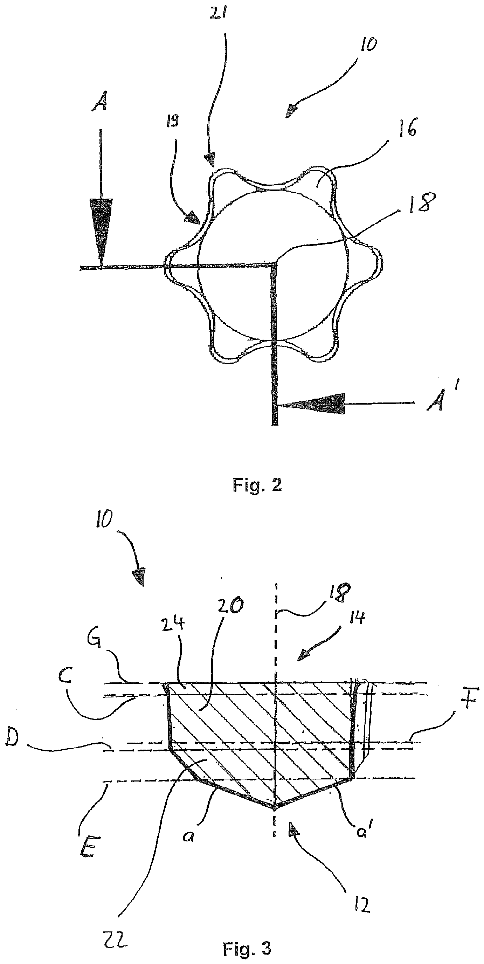

Fig. 2 zeigt eine Draufsicht auf das Antriebswerkzeug 10 aus Fig. 1 mit einer Blickrichtung entlang der Mittelachse 18. In Fig. 2 ist zu sehen, dass die ersten Vorsprünge 16 einen keilartigen Querschnitt aufweisen und radial nach außen vorstehen, d.h. senkrecht zur Mittelachse 18. Zwischen je zwei benachbarten ersten Vorsprüngen 16 befindet sich jeweils ein radial innerer Kernabschnitt 19. Jeder erste Vorsprung 16 weist außerdem einen radial äußeren Scheitelabschnitt 21 auf. In Fig. 2 ist lediglich die Position der Mittelachse 18 an der Ecke der gewinkelten Linie von A nach A' dargestellt. Die Mittelachse 18 verläuft senkrecht zur Zeichenebene.

Fig. 3 zeigt eine seitliche Schnittansicht des Antriebswerkzeugs 10 bei einem Schnitt entlang der in Fig. 2 eingezeichneten gewinkelten Linie von A nach A'. Der Schnitt von A zur Mittelachse 18 in Fig. 2 entspricht dabei in Fig. 3 dem Bereich links von der Mittelachse 18. Der Schnitt von der Mittelachse 18 bis A' in Fig. 2 entspricht in Fig. 3 dem Bereich rechts von der Mittelachse 18.

In Fig. 3 sind zwei Abschnitte von verschiedenen Mantellinien des Antriebswerkzeugs durch die fett gezeichneten Linien a und a' dargestellt. Auf der linken Seite der Mittelachse 18 ist die Schnittansicht durch den Abschnitt einer Mantellinie a begrenzt. In der vorliegenden Offenbarung bezeichnet der Begriff "Mantellinie des Antriebswerkzeugs" stets die Schnittlinie der Außenfläche des Antriebswerkzeugs mit einer Ebene, die die Mantellinie enthält. Im Falle der Mantellinie a ist dies die in Fig. 2 eingezeichnete Schnittebene, die sich zwischen dem Pfeil A und der Mittelachse 18 erstreckt. Der schraffierte Bereich, der sich in Fig. 3 rechts von der Mittelachse 18 befindet, ist von einer anderen Mantellinie a' begrenzt, welche die Schnittlinie der Außenfläche des Antriebswerkzeugs 10 mit der weiteren in Fig. 2 eingezeichneten Schnittebene ist, die sich zwischen der Mittelachse 18 und dem Pfeil A' erstreckt. Die Mantellinienabschnitte a und a', die in Fig. 3 in einer Ebene dargestellt sind, befinden sich also in Wirklichkeit in Schnittebenen, die senkrecht zueinander stehen. Der links von der Mittelachse 18 dargestellte Mantellinienabschnitt a verläuft entlang eines radial äußeren Scheitelabschnitts 21 eines ersten Vorsprungs 16. Der rechts von der Mittelachse 18 dargestellte Mantellinienabschnitt a' verläuft hingegen durch einen radial inneren Kernabschnitt 19 zwischen benachbarten ersten Vorsprüngen 16.

Die in Fig. 3 gezeigte Ausführungsform des Antriebswerkzeugs 10 umfasst einen quasi-zylindrischen Abschnitt 20, einen sich verjüngenden Abschnitt 22 und einen Endabschnitt 24. Wie in Fig. 3 dargestellt ist, ist der quasi-zylindrische Abschnitt 20 in axialer Richtung entlang der Mittelachse 18 durch die gestrichelten Linien C und F begrenzt, der sich verjüngende Abschnitt 22 durch die Linien D und E begrenzt und der Endabschnitt 24 durch die Linien G und C begrenzt. Der Endabschnitt 24 ist auf der Seite des quasi-zylindrischen Abschnitts 20 angeordnet, die dem zweiten Ende 14 näher ist. Der sich verjüngende Abschnitt 22 ist auf der Seite des quasi-zylindrischen Abschnitts 20 angeordnet, die dem ersten Ende 12 näher ist. In der in Fig. 3 dargestellten Ausführungsform des Antriebswerkzeugs 10 bilden die Mantellinien in dem quasi-zylindrischen Abschnitt 20 in den radial inneren Kernabschnitten 19 (siehe Mantellinie a') einen Winkel von 3,5° mit der Mittelachse 18.

Auf dem sich verjüngenden Abschnitt 22 verjüngt sich das Antriebswerkzeug 10 in Richtung auf das zweite Ende 12. Wie der Fig. 3 entnommen werden kann, bilden in der Ausführungsform aus Fig. 3 die Mantellinien im Bereich der radial äußeren Scheitelabschnitte 21 der ersten Vorsprünge 16 (Mantellinienabschnitt a in Fig. 3) in dem sich verjüngenden Abschnitt 22 mit der Mittelachse 18 einen Winkel, der 45° beträgt. Mit anderen Worten kann der sich verjüngende Abschnitt 22 der Ausführungsform aus Fig. 3 in einen gedachten Kegelstumpf einbeschrieben werden, der einen halben Öffnungswinkel von 45° aufweist.

In dem Bereich, der sich in Fig. 3 zwischen den gestrichelten Linien E und F befindet, verlaufen die Mantellinien des Antriebswerkzeugs 10 der Ausführungsform aus Fig. 3 in radial inneren Bereichen zwischen benachbarten ersten Vorsprüngen 16 in einem Winkel zur Mittelachse, der kleiner als 1,5° ist. Vorzugsweise verlaufen sie parallel zur Mittelachse. Dies ist in Fig. 3 auf der rechten Seite der Mittelachse 18 anhand der Mantellinie a' zu sehen, die zwischen den gestrichelten Linien E und F zumindest annähernd parallel zur Mittelachse 18 verläuft. Aufgrund dieses Bereiches kann das Antriebswerkzeugs 10 sehr gut bzw. passgenau in einer Aufnahmevertiefung eines zugehörigen Verbindungspartners geführt sein, wodurch der Wobble zusätzlich - d.h. außer durch eine größere Eindringtiefe - reduziert werden kann.

Wie beschrieben wurde, benötigt das Antriebswerkzeug 10 auf Flächen, die in Umfangsrichtung weisen, keine zur Mittelachse 18 geneigten Mantellinien. Dadurch kann vermieden werden, dass beim Anwenden eines Antriebsmomentes eine axiale Reaktionskraft erzeugt wird. Daher wird das Antriebswerkzeugs 10 beim Anwenden des Antriebsmomentes auch nicht ausgehebelt.

In dem in Fig. 3 dargestellten Endabschnitt 24 divergieren die Mantellinien in Richtung auf das zweite Ende 14. Wie in Fig. 3 zu sehen ist, nimmt der Winkel zwischen den Mantellinien und der Mittelachse 18 in dem Endabschnitt 24 in Richtung auf das zweite Ende 14 zu. In der dargestellten Ausführungsform des Antriebswerkzeugs 10 wird in dem Endabschnitt 24 ein Winkel von 20° erreicht. Der Endabschnitt 24 verhindert ein zu starkes Verstemmen des Antriebswerkzeugs 10 in der Aufnahmevertiefung des Verbindungspartners. Damit kann er die Stärke des Stick-Fit-Effektes auf ein gewünschtes Maß begrenzen.

Auch wenn in der Ausführungsform in Fig. 3 die Mantellinien in dem Endabschnitt 24 im Bereich der radial äußeren Scheitelabschnitte 21 der ersten Vorsprünge 16 (Mantellinienabschnitt a) im Wesentlichen den gleichen Verlauf aufweisen, wie die Mantellinien in dem Endabschnitt 24 im Bereich zwischen benachbarten ersten Vorsprüngen 16 (Mantellinienabschnitt a'), ist anzumerken, dass der Verlauf in den betreffenden Bereichen auch unterschiedlich sein kann.

Es wird angemerkt, dass das Keilprofil des Antriebswerkzeugs 10 gemäß der Ausführungsform der Figuren 1 bis 3 mit seinen sechs ersten Vorsprüngen 16, als ein modifiziertes Sechsrundprofil angesehen werden kann.

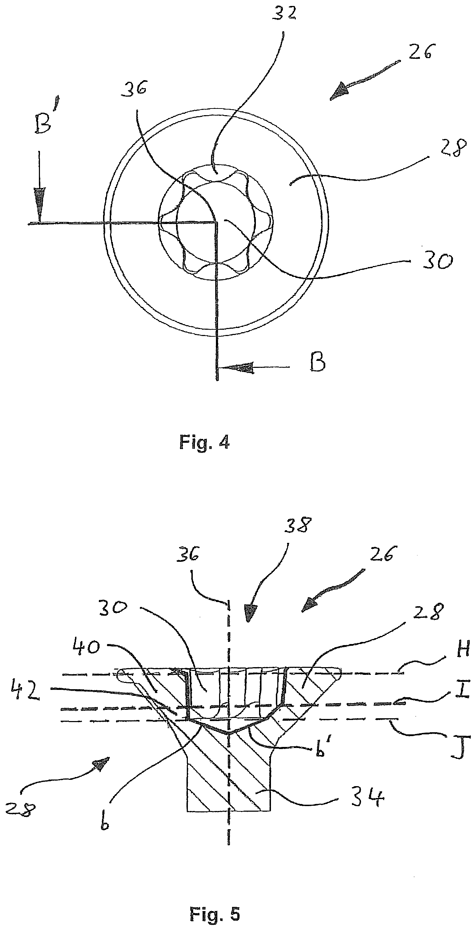

Fig. 4 zeigt die Draufsicht auf eine Schraube 26 gemäß einer Ausführungsform der Erfindung. Die Schraube 26 weist einen Kopfabschnitt 28 auf, der eine Aufnahmevertiefung 30 umfasst. Die Form der Aufnahmevertiefung 30 ist durch eine Innenfläche definiert, die radial nach innen vorstehende, im Querschnitt keilartige zweite Vorsprünge 32 aufweist.

Fig. 5 zeigt eine Schnittansicht der Schraube 26 aus Fig. 4 bei einem Schnitt entlang der in Fig. 4 eingezeichneten gewinkelten Linie von B nach B'. Die Schraube 26 umfasst einen Schaftabschnitt 34, von dem in Fig. 5 nur ein Teil gezeigt ist und der eine Schraubenachse 36 definiert. Der Kopfabschnitt 28 ist an einem zweiten Schraubenende 38 angeordnet. In Richtung der Schraubenachse 36 liegt dem Kopfabschnitt 28 ein erstes Schraubenende (nicht gezeigt) gegenüber. Der in Fig. 5 links von der Schraubenachse 36 dargestellte Schnittbereich entspricht einem Schnitt von B zur Schraubenachse 36 durch einen Scheitel eines zweiten Vorsprungs 32, wie in Fig. 4 zu sehen ist. Der Schnittbereich, der in Fig. 5 rechts von der Schraubenachse 36 dargestellt ist, entspricht einem Schnitt von B' zur Schraubenachse 36 durch einen Bereich, der zwischen zwei benachbarten zweiten Vorsprüngen 32 angeordnet ist, wie in Fig. 4 zu sehen ist. Die Schnittbereiche, die in Fig. 5 links und rechts der Schraubenachse 36 und in einer Ebene dargestellt sind, stehen in Wirklichkeit senkrecht zueinander.

In Fig. 5 ist rechts und links von der Schraubenachse 36 jeweils der Abschnitt einer Mantellinie b' bzw. b durch einen fett dargestellten Linienzug eingezeichnet. Im Unterschied zu den Mantellinien des Antriebswerkzeugs 10 verlaufen die Mantellinien der Schraube 26 auf der Innenfläche, welche die Aufnahmevertiefung 30 definiert. Bei einer Schraube sind die Mantellinien als Schnittlinie zwischen der genannten Innenfläche und einer Ebene definiert, welche die Schraubenachse 36 enthält.

Die in Fig. 4 und 5 gezeigte Ausführungsform der Schraube 26 ist geeignet, das Antriebswerkzeug 10 gemäß der in Fig. 1 bis 3 gezeigten Ausführungsform aufzunehmen. Dafür umfasst die Aufnahmevertiefung 30 der Schraube 26 einen zylindrischen (oder quasi-zylindrischen) Vertiefungsabschnitt 40 und einen sich in Richtung auf das erste Schraubenende (nicht gezeigt) verjüngenden Vertiefungsabschnitt 42. Der zylindrische oder quasi-zylindrische Vertiefungsabschnitt 40 ist zwischen den in Fig. 5 gestrichelt eingezeichneten Linien H und I angeordnet. Der sich verjüngende Vertiefungsabschnitt 42 ist zwischen den in Fig. 5 gestrichelt eingezeichneten Linien I und J angeordnet.

Bei der Schraube 26 gemäß der Ausführungsform aus Fig. 5 weisen die Mantellinien in dem sich verjüngenden Vertiefungsabschnitt 42 im Bereich zwischen den zweiten Vorsprüngen 32 einen Winkel von 45° zur Schraubenachse 36 auf. Dies ist in Fig. 5 anhand des Mantellinienabschnitts b' zu erkennen. Wie Fig. 5 zu entnehmen ist, ist der sich verjüngende Vertiefungsabschnitt 42 auf derjenigen Seite des zylindrischen oder quasi-zylindrischen Vertiefungsabschnittes 40 angeordnet, die dem zweiten Schraubenende 38 abgewandt ist bzw. dem ersten Schraubenende (nicht gezeigt) näher ist. In dem zylindrischen oder quasi-zylindrischen Vertiefungsabschnitt 40 weisen die Mantellinien einen Winkel zur Mittelachse auf, der kleiner oder gleich 4,5° ist.

Die Schraube 26 gemäß der in Fig. 5 dargestellten Ausführungsform weist einen Senkkopf mit einem Senkwinkel von 90° auf, d.h. die Kopfaußenfläche ist mit einem Winkel von 45° zur Schraubenachse 36 geneigt. Wie zuvor beschrieben wurde, entspricht dieser Winkel auch dem Winkel der Mantellinien in dem sich verjüngenden Vertiefungsabschnitt 42 im Bereich zwischen den zweiten Vorsprüngen 32. Die Mantellinien im Bereich zwischen benachbarten zweiten Vorsprüngen 32 (z. B. Mantellinienabschnitt b'), welche die minimale Wandstärke maßgeblich bestimmen, verlaufen daher in dem sich verjüngenden Vertiefungsabschnitt 42 parallel zur Außenfläche des Kopfabschnittes 28. Dadurch nimmt die Wandstärke hinter dem zylindrischen oder quasi-zylindrischen Vertiefungsabschnitt 40 in Richtung auf das erste Schraubenende nicht weiter ab, so dass die notwendige Stabilität der Schraube gewährleistet bleibt.

Aufgrund des sich verjüngenden Abschnitts 22 des Antriebswerkzeugs 10 und aufgrund des sich verjüngenden Vertiefungsabschnitts 42 der Aufnahmevertiefung 30 der Schraube 26 kann das Antriebswerkzeug 10 vergleichsweise tief in die Aufnahmevertiefung 30 der Schraube 26 eingeführt werden. Dabei wird die Wandstärke im Bereich des Kopfabschnittes 28 der Schraube 26 vorzugsweise nicht verringert, so dass die Stabilität der Schraube 26 vollständig erhalten bleibt. Gleichzeitig wird aber der Wobble zwischen dem Antriebswerkzeug 10 und der Schraube 26 vorteilhaft reduziert.

Durch das Zusammenwirken des zuvor beschriebenen quasi-zylindrischen Abschnitts 20 des Antriebswerkzeugs 10 und des zylindrischen (oder quasi-zylindrischen) Vertiefungsabschnitts 40 der Aufnahmevertiefung 30 der Schraube 26 wird zudem beim Aufnehmen des Antriebswerkzeugs 10 in die Aufnahmevertiefung 30 der Schraube 26 ein Stick-Fit-Effekt erreicht. Das Antriebswerkzeug 10 und die Schraube 26 bilden ein System, das sich in einem verbundenen Zustand befindet, wenn das Antriebswerkzeug 10 in der Aufnahmevertiefung 30 aufgenommen ist. Aufgrund des Stick-Fit-Effektes kann das System beliebig im Raum verschwenkt werden, ohne dass sich dabei die Schraube 26 vom dem Antriebswerkzeug 10 löst oder abfällt. Um den verbundenen Zustand zu lösen muss eine gewisse Kraft aufgewendet werden, welche die Haltekraft des Stick-Fit-Effektes überwindet.

Wenn das Antriebswerkzeug 10 im verbundenen Zustand um die Mittelachse 18 gedreht wird, dann wird das Antriebsmoment über die ersten Vorsprünge 16 und die zweiten Vorsprünge 32, die ineinander greifen, auf die Schraube 26 übertragen.

Das Profil der Aufnahmevertiefung 30 der erfindungsgemäßen Schraube 26 einer der zuvor beschriebenen Ausführungsformen kann als ein modifiziertes Sechsrundprofil angesehen werden kann. Damit sämtliche erfindungsgemäßen Vorteile zur Verfügung gestellt werden, wird die Schraube 26 der beschriebenen Ausführungsformen vorzugsweise mit dem Antriebswerkzeugs 10 der beschriebenen Ausführungsformen verwendet. Es ist jedoch auch möglich, die Schraube 26 mit einem herkömmlichen Antriebswerkzeug mit einem Sechsrundprofil gemäß des internationalen Standards ISO 10664 zu verwenden.

Auch wenn in den Figuren und in der vorhergehenden Beschreibung bevorzugte Ausführungsbeispiele aufgezeigt und detailliert beschrieben wurden, sollte dies als rein beispielhaft und die Erfindung nicht einschränkend angesehen werden.

### BEZUGSZEICHENLISTE

- 10: Antriebswerkzeug
- 12: erstes Ende
- 14: zweites Ende
- 16: erste Vorsprünge
- 18: Mittelachse
- 19: radial innerer Kernabschnitt
- 20: quasi-zylindrischer Abschnitt
- 21: radial äußerer Scheitelabschnitt
- 22: sich verjüngender Abschnitt
- 24: Endabschnitt
- 26: Schraube
- 28: Kopfabschnitt
- 30: Aufnahmevertiefung
- 32: zweite Vorsprünge
- 34: Schaftabschnitt
- 36: Schraubenachse
- 38: zweites Schraubenende
- 40: zylindrischer oder quasi-zylindrischer Vertiefungsabschnitt
- 42: sich verjüngender Vertiefungsabschnitt

## Patentansprüche

1. Antriebswerkzeug (10) zur Übertragung eines Antriebsmoments auf einen Verbindungspartner, insbesondere auf eine Schraube (26), das in eine Aufnahmevertiefung (30) des Verbindungspartners geführt werden kann und das das Antriebsmoment bei einer Drehung um eine Mittelachse (18) überträgt,
wobei das Antriebswerkzeug (10)
- ein erstes Ende (12) und ein zweites Ende (14) hat,
- radial nach außen vorstehende, im Querschnitt keilartige erste Vorsprünge (16) aufweist, die geeignet sind, das Antriebsmoment auf den Verbindungspartner zu übertragen, wobei sich zwischen je zwei benachbarten keilartigen ersten Vorsprüngen (16) jeweils ein radial innerer Kernabschnitt (19) befindet und jeder der keilartigen ersten Vorsprünge (16) einen radial äußeren Scheitelabschnitt (21) umfasst,
- einen quasi-zylindrischen Abschnitt (20) umfasst, dessen Außenfläche in dem Sinne quasi-zylindrisch ist, dass
• sämtliche Mantellinien, die definiert sind als Schnittlinie zwischen der Außenfläche des Antriebswerkzeugs (10) und einer Ebene, welche die Mittelachse (18) enthält, im Bereich des quasi-zylindrischen Abschnitts (20) mit der Mittelachse (18) einen Winkel bilden, der kleiner als 10° ist, jedoch
• die Außenfläche zumindest abschnittsweise derart konisch ist, dass die Mantellinien in den Kernabschnitten (19) gegenüber der Mittelachse (18) um mindestens 1,5°, vorzugsweise um mindestens 2,5° geneigt sind, und
wobei das Antriebswerkzeug (10)
einen sich in Richtung auf das erste Ende (12) verjüngenden Abschnitt (22) umfasst, der auf der dem ersten Ende (12) näheren Seite des quasi-zylindrischen Abschnitts (20) angeordnet ist und in dem die Mantellinien im Bereich der radial äußeren Scheitelabschnitte (21) der ersten Vorsprünge (16) zumindest abschnittsweise einen Winkel zur Mittelachse (18) aufweisen, der mindestens 30°, vorzugsweise mindestens 40° und besonders vorzugsweise mindestens 44° beträgt, und der kleiner als 60° ist.

2. Antriebswerkzeug (10) nach Anspruch 1, bei dem die Mantellinien in dem quasi-zylindrischen Abschnitt (20) in den radial äußeren Scheitelabschnitten (21) zumindest abschnittsweise um mindestens 1,5°, vorzugsweise um mindestens 2,5° gegenüber der Mittelachse (18) geneigt sind.

3. Antriebswerkzeug (10) nach Anspruch 1 oder 2, bei dem die Querschnittsform des quasi-zylindrischen Abschnitts (20) im Wesentlichen der Querschnittsform eines Sechsrundprofils nach ISO 10664 entspricht.

4. Antriebswerkzeug (10) nach einem der vorhergehenden Ansprüche, bei dem die Mantellinien in dem sich verjüngenden Abschnitt (22) im Bereich der Scheitelabschnitte (21) zumindest abschnittsweise einen Winkel zur Mittelachse (18) aufweisen, der kleiner als 50° und vorzugsweise kleiner als 46° ist.

5. Antriebswerkzeug (10) nach einem der vorhergehenden Ansprüche, bei dem die Mantellinien in dem sich verjüngenden Abschnitt (22) in den radial inneren Kernabschnitten (19) zumindest abschnittsweise unter einem Winkel zur Mittelachse (18) verlaufen, der kleiner als 1,5° ist, und vorzugsweise zumindest annähernd parallel zur Mittelachse (18) verlaufen.

6. Antriebswerkzeug (10) nach einem der vorhergehenden Ansprüche, bei dem die Mantellinien in dem genannten quasi-zylindrischen Abschnitt (20) mit der Mittelachse (18) einen Winkel bilden, der kleiner oder gleich 4,5° ist.

7. Antriebswerkzeug (10) nach einem der vorhergehenden Ansprüche, das weiterhin einen Endabschnitt (24) umfasst, der auf der dem zweiten Ende (14) näheren Seite des quasi-zylindrischen Abschnitts (20) angeordnet ist und der Mantellinien aufweist, die in Richtung auf das zweite Ende (14) von der Mittelachse (18) divergieren und dabei mit der Mittelachse (18) einen Winkel bilden, der größer als 4,5° ist, und der vorzugsweise in Richtung auf das zweite Ende (14) zunimmt, wobei besonders vorzugsweise ein Winkel von 10° erreicht oder überschritten wird.

8. Schraube (26), auf die mit einem Antriebswerkzeug (10) nach einem der vorhergehenden Ansprüche ein Antriebsmoment übertragen werden kann, wobei die Schraube (26) folgendes umfasst:
ein erstes Schraubenende und ein zweites Schraubenende (38),
einen Schaftabschnitt mit einem Gewinde, wobei der Schaftabschnitt eine Schraubenachse (36) definiert, und
einen Kopfabschnitt (28), der am zweiten Schraubenende (38) angeordnet ist und eine Aufnahmevertiefung (30) umfasst, wobei die Form der Aufnahmevertiefung (30) durch eine Innenfläche definiert ist, die
- radial nach innen vorstehende, im Querschnitt keilartige zweite Vorsprünge (32) aufweist, an die das Antriebsmoment über die ersten Vorsprünge (16) des Antriebswerkzeugs (10) angreifen kann,
- einen zylindrischen oder quasi-zylindrischen Vertiefungsabschnitt (40) umfasst, in dem die Innenfläche in dem Sinne zylindrisch oder quasi-zylindrisch ist, dass die Mantellinien, die bei der Schraube (26) definiert sind als Schnittlinie zwischen der Innenfläche und einer Ebene, welche die Schraubenachse (36) enthält, im Bereich des zylindrischen oder quasi-zylindrischen Vertiefungsabschnitts (40) mit der Schraubenachse (36) einen Winkel bilden, der kleiner oder gleich 4,5° ist,
wobei die Aufnahmevertiefung (30)
einen sich in Richtung auf das erste Schraubende verjüngenden Vertiefungsabschnitt (42) umfasst, der auf der dem ersten Schraubende näheren Seite des zylindrischen oder quasi-zylindrischen Vertiefungsabschnitts (40) angeordnet ist und in dem die Mantellinien im Bereich zwischen den zweiten Vorsprüngen (32) zumindest abschnittsweise einen Winkel zur Schraubenachse (36) aufweisen, der mindestens 30°, vorzugsweise mindestens 40° und besonders vorzugsweise mindestens 44° beträgt, und der kleiner als 60° ist.

9. Schraube (26) nach Anspruch 8, bei der die Mantellinien in dem sich verjüngenden Vertiefungsabschnitt (42) im Bereich zwischen den zweiten Vorsprüngen (32) zumindest abschnittsweise einen Winkel zur Schraubenachse (36) aufweisen, der kleiner als 50° und vorzugsweise kleiner als 46° ist.

10. Schraube (26) nach Anspruch 8 oder 9, bei der die Mantellinien in dem sich verjüngenden Vertiefungsabschnitt (42) im Bereich des Scheitels der zweiten Vorsprünge (32) zumindest abschnittsweise unter einem Winkel zur Schraubenachse (36) verlaufen, der kleiner als 1,5° ist, und vorzugsweise zumindest annähernd parallel zur Schraubenachse (36) verlaufen.

11. Schraube (26) nach einem der Ansprüche 8 bis 10, bei der die Querschnittsform der Aufnahmevertiefung (30) im zylindrischen oder quasi-zylindrischen Vertiefungsabschnitt (40) im Wesentlichen der Querschnittsform einer Aufnahmevertiefung mit Sechsrundprofil einer Schraube nach ISO 14583 entspricht.

12. System, das folgendes umfasst:
eine Schraube (26) nach einem der Anspruch 8 bis 11,
ein Antriebswerkzeug (10) nach einem der Ansprüche 1 bis 7,
wobei das Antriebswerkzeug (10) zur Bildung eines verbundenen Zustands des Systems lösbar in die Aufnahmevertiefung (30) der Schraube (26) geführt werden kann.

13. System nach Anspruch 12, bei dem die Form der Aufnahmevertiefung (30) derart an die Form des Antriebswerkzeugs (10) angepasst ist, dass die Schraube (26) und das Antriebswerkzeug (10) im verbundenen Zustand aus einer mittleren Position heraus, in welcher die Mittelachse (18) des Antriebswerkzeugs (10) und die Schraubenachse (36) zusammenfallen, um maximal 10° und vorzugsweise um maximal 5° gegeneinander verkippt werden können.

14. System nach Anspruch 12 oder 13, bei dem im verbundenen Zustand das Spiel zwischen der Außenfläche des Antriebswerkzeugs (10) und der Innenfläche der Aufnahmevertiefung (30) im Bereich zwischen den zweiten Vorsprüngen (32) der Aufnahmevertiefung (30) größer ist als im Bereich der Kernabschnitte (19) des Antriebswerkzeugs (10).

15. System nach einem der Ansprüche 12 bis 14, bei dem der Kopfabschnitt (28) der Schraube (26) eine Senkform mit einem Lenkwinkel β aufweist, wobei die Mantellinien in dem sich verjüngenden Abschnitt (22) des Antriebswerkzeugs (10) im Bereich der Scheitelabschnitte (21) zumindest abschnittsweise einen Winkel zur Mittelachse (18) aufweisen, der
- größer oder gleich 0,7 x β/2, vorzugsweise größer oder gleich 0,9 x β/2 ist, und/oder
- der kleiner oder gleich 1,3 x β/2, vorzugsweise kleiner oder gleich 1,1 x β/2 ist.

## Claims

1. A drive tool (10) for transmitting a drive torque to a connection partner, particularly to a screw (26), wherein the drive tool can be inserted into a receiving recess (30) of the connection partner and transmits the drive torque during a rotation about a central axis (18),
wherein the drive tool (10)
- has a first end (12) and a second end (14),
- has radially outwardly projecting first protrusions (16) that are wedge-like in cross-section, which radially outwardly projecting first protrusions (16) are suitable for transmitting the drive torque to the connection partner, wherein one radially inner core section (19), respectively, is arranged between every two adjacent wedge-like first protrusions (16) and each of the wedge-like first protrusions (16) comprises a radially outer vertex section (21),
- comprises a quasi-cylindrical section (20) whose outer surface is quasi-cylindrical in the sense that
• all surface lines, which are defined as intersection lines between the outer surface of the drive tool (10) and a plane which contains the central axis (18), form in the region of the quasi-cylindrical section (20) an angle of less than 10° with the central axis (18), however
• the outer surface, at least in sections, is of such conical shape that the surface lines in the core sections (19) are inclined by at least 1.5°, preferably by at least 2.5° with respect to the central axis (18) and
wherein the drive tool (10)
comprises a tapering section (22) tapering towards the first end (12), which tapering section is arranged on the side of the quasi-cylindrical section (20) closer to the first end (12) and in which the surface lines in the region of the radially outer vertex sections (21) of the first protrusions (16) have at least in sections an angle of at least 30°, preferably at least 40° and particularly preferably at least 44°, and at least 60° with respect to the central axis (18).

2. The drive tool (10) according to Claim 1, in which the surface lines in the quasi-cylindrical section (20) in the radially outer vertex sections (21) are inclined at least in sections by at least 1.5°, preferably by at least 2.5° with respect to the central axis (18).

3. The drive tool (10) according to Claims 1 or 2, in which the cross-sectional shape of the quasi-cylindrical section (20) substantially corresponds to the cross-sectional shape of a hexalobular profile according to ISO 10664.

4. The drive tool (10) according to any one of the preceding claims, in which the surface lines in the tapering section (22) in the region of the vertex sections (20) have at least in sections an angle with respect to the central axis (18) of less than 50° and preferably less than 46°.

5. The drive tool (10) according to any one of the preceding claims, in which the surface lines in the tapering section (22) in the radially inner core sections (19) run at least in sections at an angle with respect to the central axis (18) of less than 1.5°, and preferably run at least almost parallel to the central axis (18).

6. The drive tool (10) according to any one of the preceding claims, in which the surface lines in said quasi-cylindrical section (20) form an angle with the central axis (18) that is less than or equal to 4.5°.

7. The drive tool (10) according to any one of the preceding claims, further comprising an end section (24), which is arranged on the side of the quasi-cylindrical section (20) that is closer to the second end (14) and has surface lines that diverge towards the second end (14) of the central axis (18) and upon diverging form in this process an angle with the central axis (18) that is greater than 4.5° and preferably increases towards the second end (14), wherein an angle of 10° is particularly preferably reached or exceeded.

8. A screw (26), to which a drive torque can be transmitted with a drive tool (10) according to any one of the preceding claims, wherein the screw (26) comprises the following:
a first screw end and a second screw end (38), a shaft section with a thread, wherein the shaft section defines a screw axis (36), and
a head section (28) that is arranged at the second screw end (38) and that comprises a receiving recess (30), wherein the shape of the receiving recess (30) is defined by an inner surface, which
- has radially inwardly projecting second protrusions (32) that are wedge-like in cross-section, which the drive torque can engage with via the first protrusions (16) of the drive tool (10),
- a cylindrical or quasi-cylindrical recess section (40), in which the inner surface is cylindrical or quasi-cylindrical in the sense that the surface lines, which are defined on the screw (26) as intersection lines between the inner surface and a plane that contains the screw axis (36), form an angle with the screw axis (36) that is less than or equal to 4.5° in the region of the cylindrical or quasi-cylindrical recess section (40),
wherein the receiving recess (30)
comprises a recess section (42) tapering towards the first screw end, which is arranged on the side of the cylindrical or quasi-cylindrical recess section (40) that is closer to the first screw end and in which the surface lines in the region between the second protrusions (32) have, at least in sections, an angle with respect to the screw axis (36) of at least 30°, preferably at least 40° and particularly preferably at least 44°, and less than 60°.

9. The screw (26) according to Claim 8, in which the surface lines in the tapering recess section (42) in the region between the second protrusions (32) have, at least in sections, an angle with respect to the screw axis (36) of less than 50° and preferably less than 46°.

10. The screw (26) according to Claims 8 or 9, in which the surface lines in the tapering recess section (42) in the region of the vertices of the second protrusions (32) form, at least in sections, an angle with respect to the screw axis (36) of less than 1.5°, and are preferably at least almost parallel to the screw axis (36).

11. The screw (26) according to any one of the Claims 8 to 10, in which the cross-sectional shape of the receiving recess (30) in the cylindrical or quasi-cylindrical recess section (40) substantially corresponds to the cross-sectional shape of a receiving recess with a hexalobular profile of a screw according to ISO 14583.

12. A system, which comprises the following:
a screw (26) according to any one of the Claims 8 to 11, a drive tool (10) according one of the Claims 1 to 7, wherein the drive tool (10) can be releasably inserted into the receiving recess (30) of the screw (26) to form a connected state of the system.

13. The system according to Claim 12, in which the shape of the receiving recess (30) is adapted to the shape of the drive tool (10) such that the screw (26) and the drive tool (10), from a central position in which the central axis (18) of the drive tool and the screw axis (36) coincide, can be tilted in the connected state against one another by a maximum of 10° and preferably by a maximum of 5°.

14. The system according to Claim 12 or 13, in which, in the connected state, the play between the outer surface of the drive tool (10) and the inner surface of the receiving recess (30) in the region between the second protrusions (32) of the receiving recess (30) is greater than in the region of the core sections (19) of the drive tool (10).

15. The system according to any one of the Claims 12 to 14, in which the head section (28) of the screw (26) has a countersink shape with a countersink angle β, wherein the surface lines in the tapering section (22) of the drive tool (10) in the region of the vertex sections (21) have, at least in sections, an angle with respect to the central axis (18)
- that is greater than or equal to 0.7 x β/2, preferably greater than or equal to 0.9 x β/2, and/or
- that is less than or equal to 1.3 x β/2, preferably less than or equal to 1.1 x β/2.

## Revendications

1. Outil d'entraînement (10) pour la transmission d'un couple d'entraînement à un partenaire de liaison, plus particulièrement à une vis (26), qui peut être guidée dans un creux de logement (30) du partenaire de liaison et qui transmet le couple d'entraînement lors d'une rotation autour d'un axe central (18),
l'outil d'entraînement (10)
- comprenant une première extrémité (12) et une deuxième extrémité (14),
- comprenant des premières saillies (16) de section cunéiforme dépassant radialement vers l'extérieur, qui sont conçues pour transmettre le couple d'entraînement au partenaire de liaison, une portion centrale interne radiale (19) se trouvant entre deux premières saillies cunéiformes (16) adjacentes et chacune des premières saillies cunéiformes (16) comprenant une portion de sommet externe radiale (21),
- comprenant une portion quasi-cylindrique (20) dont la surface externe est quasi-cylindrique dans le sens où
• toutes les lignes d'enveloppe, qui sont définies comme des lignes d'intersection entre la surface externe de l'outil d'entraînement (10) et un plan qui contient l'axe central (18), forment, au niveau de la portion quasi-cylindrique (20), avec l'axe central (18), un angle inférieur à 10°, mais
• la surface externe est au moins partiellement conique de façon à ce que les lignes d'enveloppe sont inclinées, dans les portions centrales (19), d'au moins 1,5°, de préférence d'au moins 2,5° par rapport à l'axe central (18) et l'outil d'entraînement (10)
comprenant une portion (22) se rétrécissant en direction de la première extrémité (12), qui est disposée sur le côté de la portion quasi-cylindrique (20) le plus proche de la première extrémité (12) et dans laquelle les lignes d'enveloppe présentant, au niveau des portions de sommets radiales externes (21) des premières saillies (16), au moins partiellement un angle par rapport à l'axe central (18), qui est d'au moins 30°, de préférence d'au moins 40° et plus particulièrement de préférence d'au moins 44° et inférieur à 60°.

2. Outil d'entraînement (10) selon la revendication 1, dans lequel les lignes d'enveloppe sont inclinées, dans la portion quasi-cylindrique (20), dans les portions de sommets radiales externes (21), au moins partiellement d'au moins 1,5°, de préférence d'au moins 2,5° par rapport à l'axe central (18).

3. Outil d'entraînement (10) selon la revendication 1 ou 2, dans lequel la forme de section transversale de la portion quasi-cylindrique (20) correspond globalement à la forme de section transversale d'un profilé à six arrondis selon ISO 10664.

4. Outil d'entraînement (10) selon l'une des revendications précédentes, dans lequel les lignes d'enveloppe présentent, dans la portion à rétrécissement (22), au niveau des portions de sommets (21), au moins partiellement un angle par rapport à l'axe central (18) qui est inférieur à 50° et de préférence inférieur à 46°.

5. Outil d'entraînement (10) selon l'une des revendications précédentes, dans lequel les lignes d'enveloppe forment, dans la portion à rétrécissement (22), dans les portions centrales radiales internes (19), au moins partiellement un angle avec l'axe central (18) qui est inférieur à 1,5° et de préférence s'étendent au moins approximativement parallèlement à l'axe central (18).

6. Outil d'entraînement (10) selon l'une des revendications précédentes, dans lequel les lignes d'enveloppe forment, dans la portion quasi-cylindrique (20) mentionnée, avec l'axe central (18), un angle inférieur ou égal à 4,5°.

7. Outil d'entraînement (10) selon l'une des revendications précédentes, qui comprend une portion d'extrémité (24) qui est disposé sur le côté de la portion quasi-cylindrique (20) le plus proche de la deuxième extrémité (14) et qui comprend des lignes d'enveloppe, qui divergent, dans la direction de la deuxième extrémité (14), de l'axe central (18) et forment alors avec l'axe central (18) un angle supérieur à 4,5° et qui augmente de préférence en direction de la deuxième extrémité (14), plus particulièrement de préférence un angle de 10° est atteint ou dépassé.

8. Vis (26) à laquelle un outil d'entraînement (10) selon l'une des revendications précédentes peut transmettre un couple d'entraînement, la vis (26) comprend ce qui suit :
une première extrémité de vis et une deuxième extrémité de vis (38),
une portion de tige avec un filetage, la portion de tige définissant un axe de vis (36) et
une portion de tête (28), qui est disposée sur la deuxième extrémité de vis (38) et qui comprend une cavité de logement (30), la forme de la cavité de logement (30) étant définie par une surface interne, qui
- comprend des deuxièmes saillies (32) de section transversale cunéiforme dépassant radialement vers l'intérieur, sur lesquelles le couple d'entraînement peut agir par l'intermédiaire des premières saillies (16) de l'outil d'entraînement (10),
- comprend une portion de cavité cylindrique ou quasi-cylindrique (40), dans laquelle la surface interne est cylindrique ou quasi-cylindrique dans le sens où les lignes d'enveloppe qui sont définies sur la vis (26) comme des lignes d'intersection entre la surface interne et un plan qui contient l'axe de la vis (36), forment, au niveau de la portion de cavité cylindrique ou quasi-cylindrique (40), avec l'axe de la vis (36), un angle inférieur ou égal à 4,5°,
la cavité de logement (30)
comprenant une portion de cavité (42) se rétrécissant en direction de la première extrémité de vis, qui est disposée sur le côté de la portion de cavité cylindrique ou quasi-cylindrique (40) la plus proche de la première extrémité de vis et dans laquelle les lignes d'enveloppe présentent, au niveau des deuxièmes saillies (32), au moins partiellement, un angle par rapport à l'axe de vis (36) qui est d'au moins 30°, de préférence d'au moins 40° et plus particulièrement de préférence d'au moins 44° et qui est inférieur à 60°.

9. Vis (26) selon la revendication 8, dans laquelle les lignes d'enveloppe présentent, dans la portion de cavité à rétrécissement (42), dans la zone entre les deuxièmes saillies (32), au moins partiellement, un angle par rapport à l'axe de vis (36), qui est inférieur à 50° et de préférence inférieur à 46°.

10. Vis (26) selon la revendication 8 ou 9, dans laquelle les lignes d'enveloppe s'étendent, dans la portion de cavité à rétrécissement (42), au niveau du sommet de deuxièmes saillies (32), au moins partiellement en formant un angle par rapport à l'axe de vis (36), qui est inférieur à 1,5° et s'étendent de préférence au moins approximativement parallèlement à l'axe de vis (36).

11. Vis (26) selon l'une des revendications 8 à 10, dans laquelle la forme de la section transversale de la cavité de logement (30) correspond, dans la portion de cavité cylindrique ou quasi-cylindrique (40), globalement à la forme de section transversale d'une cavité de logement avec un profilé à six ronds d'une vis selon ISO 14583.

12. Système qui comprend ce suit :
une vis (26) selon l'une des revendications 8 à 11,
un outil d'entraînement (10) selon l'une des revendications 1 à 7, l'outil d'entraînement (10) pouvant être guidé pour la formation d'un état relié du système de manière amovible dans la cavité de logement (30) de la vis (26).

13. Système selon la revendication 12, dans lequel la forme de la cavité de logement (30) est adaptée à la forme de l'outil d'entraînement (10) de façon à ce que la vis (26) et l'outil d'entraînement (10) peuvent être basculés, dans l'état relié, hors d'une position centrale, dans laquelle l'axe centrale (18) de l'outil d'entraînement (10) et l'axe de vis (36) coïncident, de maximum 10° et de préférence de maximum 5° entre eux.

14. Système selon la revendication 12 ou 13, dans lequel, dans l'état relié, le jeu entre la surface externe de l'outil d'entraînement (10) et la surface interne de la cavité de logement (30) est supérieur dans la zone entre les deuxièmes saillies (32) de la cavité de logement (30) au jeu dans la zone des portions centrales (19) de l'outil d'entraînement (10).

15. Système selon l'une des revendications 12 à 14, dans lequel, la portion de tête (28) de la vis (26) présente une forme fraisée avec un angle de fraisage β, les lignes d'enveloppe présentant, dans la portion à rétrécissement (22) de l'outil d'entraînement (10), au niveau des portions de sommets (21), au moins partiellement un angle par rapport à l'axe central (18) qui
- est supérieur ou égal à 0,7 x β/2, de préférence supérieur ou égal à 0,9 x β/2 et/ou
- est inférieur ou égal à 1,3 x β/2, de préférence inférieur ou égal à 1,1 x β/2.
